(19) Europäisches Patentamt
European Patent Office
Office européen des brevets

(11) **EP 1 584 531 B1**

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(51) Int Cl.:
**B60T 7/12** *(2006.01)*

(21) Anmeldenummer: **05005689.4**

(22) Anmeldetag: **16.03.2005**

(54) **Verfahren und System zur Anfahrhilfe eines Kraftfahrzeugs, insbesondere Nutzfahrzeugs, mit einer automatischen Standbremse**

Starting aid method and system for a vehicle, in particular for a commercial vehicle, with an automatic static braking

Procédé et dispositif d'aide au démarrage pour un véhicule automobile, notamment un véhicule utilitaire, avec un frein de stationnement automatique

(84) Benannte Vertragsstaaten:
**DE FR IT NL SE**

(30) Priorität: **10.04.2004 DE 102004017703**

(43) Veröffentlichungstag der Anmeldung:
**12.10.2005 Patentblatt 2005/41**

(73) Patentinhaber: **MAN Nutzfahrzeuge Aktiengesellschaft**
**80995 München (DE)**

(72) Erfinder: **Franke, Olaf, Dipl.-Ing.**
**80935 München (DE)**

(56) Entgegenhaltungen:
DE-A1- 10 065 589          DE-A1- 10 105 749
DE-A1- 10 221 835          DE-A1- 10 244 024

**Beschreibung**

Die Erfindung betrifft ein Verfahren und ein System zur Anfahrhilfe eines Kraftfahrzeugs mit einer automatischen Standbremse (Hillholder, Easy-Start), bei dem bei Betätigung einer Kupplung vom Fahrzeugmotor auf den Antriebsstrang eines Fahrzeugs ein Antriebsmoment übertragen wird und die Standbremse des Fahrzeugs gelöst wird.

Beispielsweise wird bei dem Hillholder der Bremspedalweg bei stehendem Fahrzeug erfasst, der einen bestimmten Bremsdruck an den Radbremszylindern ergibt, damit das Fahrzeug an einer Steigerung oder einem Gefälle stehen bleibt. Dieser Bremsdruck an den Radbremszylindern wird "eingefroren", das bedeutet, der Bremsdruck bleibt aufrecht erhalten, so dass der Fahrzeugführer den Fuß vom Bremspedal nehmen kann. Beim Anfahren an einer Steigung wird vom Antriebsmotor über die Kupplung ein Antriebsmoment, das über den Kupplungsweg ermittelt wird, eingesteuert, so dass, abhängig vom Kupplungsweg, das Getriebe ein Signal zum Lösen der Standbremse geben kann. Die Erfassung des Kupplungsweges erfolgt mechanisch über einen Weggeber.

Aus DE 196 25 919 sind ein Verfahren und ein System zur Anfahrhilfe eines Kraftfahrzeugs bekannt, welche bei stehendem Fahrzeug mittels eines in den Radbremszylindern eingesperrten Bremsdruckes ein Kriechen des Fahrzeugs verhindert (Kriechunterdrückung). Sobald der Fahrer das Gaspedal betätigt oder das Motormoment einen bestimmten Schwellenwert überschreitet, wird durch Absenkung des eingesperrten Bremsdruckes die Standbremse gelöst. Vor allem beim Anfahren an einer Steigung ist der Zeitpunkt des Lösens der Standbremse wesentlich, um ein Zurückrollen des Fahrzeugs zu vermeiden.

Weitere Verfahren bzw. Systemen zur Anfahrthilfe eines Kraftfahrzeuges sind aus DE 10065589, DE 10221835, DE 10105749 bekannt.

Aufgabe der Erfindung ist es, ein Verfahren und ein nicht anfälliges und über die Nutzungsdauer des Fahrzeugs genaues System der eingangs genannten Art zu schaffen, bei welchem bei unterschiedlichen Anfahrsituationen, ein anstehendes Kupplungsmoment ein Lösen der Standbremse erlaubt.

Dadurch, dass durch den Bordrechner ein anstehendes Drehmoment an der Kupplung ermittelt wird, kann dieser ein Signal zum Lösen der Standbremse generieren.

Der Bordrechner erhält von der EDC (Elektronic Diesel Control) das von der Einspritzmenge abhängige momentane Bruttodrehmoment. Das Bruttodrehmoment ist jenes Drehmoment, das durch den Verbrennungsvorgang entsteht.

Das an die Kupplung bereitgestellte Antriebsmoment $M_K$ ergibt sich aus der Drehmomentbilanz des Fahrzeugmotors nach folgender Beziehung:

$$M_K = M_M - M_S - M_{NV} - [\pm M_D] \tag{1}$$

$M_K$   an der Kupplung bereitgestelltes Drehmoment

$M_M$   Bruttodrehmoment des Motors

Ms   Schleppmoment

$M_{NV}$   Drehmoment motorseitiger Nebenverbraucher

$M_D$   dynamisches Moment des Motors, wobei

$$M_D = J\frac{d\omega}{dt} \approx J\frac{\Delta\omega}{\Delta t} = J\frac{\omega(t_{x+1}) - \varpi(t_x)}{t_{x+1} - t_x} \tag{2}$$

wobei

J   das Rotationsmassenträgheitsmoment des Motors,

ω   die Winkelgeschwindigkeit der Kurbelwelle des Motors ist und

t    zeitdiskrete Abtastschritte sind.

Ausgehend von dieser Momentenbildung nach den Formeln (1) und (2) und dem eingesteuerten Bremsdruck, sind erfindungsgemäß zwei vereinfachte und preiswerte Fahrzeugausbaustufen (I, II) -der Anfahrthilfe darstellbar:

Fahrzeugaufbaustufe I:

Es wird ein für alle Anhaltevorgänge statischer Bremswert oder statischer Bremsdruck, der beispielsweise über Versuche ermittelt wird, festgelegt und im Bordrechner abgelegt. Bei einem Anfahrvorgang wird über die Momentenbildung nach den Formeln (1) und (2) ein Moment an der schleifenden Kupplung ermittelt, das ab einem bestimmten Moment, das größer ist als das Moment, das sich aus dem festgelegten Bremswert, Bremsdruck bzw. dem entsprechenden Bremsmoment ergibt, ein Lösen der Bremse erlaubt. Das Signal zum Lösen der Bremse wird beispielsweise vom Bordrechner an die EBS (Electronic Brake System) gegeben, die ein Lösen der Bremse veranlaßt.
Steigungen, Gefälle oder horizontale Fahrbahn sind bei diesem Verfahren nicht berücksichtigt. In manchen Fällen muß deshalb der Fahrzeugführer noch unterstützend eingreifen je nach dem, mit welchem Wert der statistische Bremsdruck festgelegt ist.

Fahrzeugaufbaustufe II:

Es wird bei einem Anhaltevorgang ein bestimmter Bremsdruck, der für das Anhalten des Fahrzeugs vom Fahrzeugführer indirekt über das Bremspedal eingesteuert wurde, als Bremswert im Bordrechner gespeichert. Bei beispielsweies einem bekannten "Hillholder" bleibt dieser eingesteuerte Bremswert bei einem Anhaltevorgang an der Bremse angelegt, so dass der Fahrzeugführer den Fuß vom Bremspedal nehmen kann. Dieser aktuelle Bremswert wird bei dem erfindungsgemäßen Verfahren herangezogen. Das heißt beim Wiederanfahren muß das an der schleifenden Kupplung anstehende Moment mindestens so groß oder größer, als das eingebremste Moment, das sich aus dem Bremswert ergibt, sein, damit über den Bordrechner und die EBS ein Signal zum Lösen der Bremse gegeben wird.
Das Fahrzeug wurde beispielsweise mittels des Hillholders, wie eingangs beschrieben, an einer Steigung abgestellt.
Beim Wiederanfahren an der genannten Steigung wird nun nach der Erfindung verfahren.
Das an der Kupplung bereitgestellte Drehmoment $M_K$ (Kupplungsdrehmoment) meint das aktuelle Moment, das, errechnet aus einzelnen Momenten nach den Formeln (1) und (2), an der Kupplung zur Übertragung zur Verfügung steht.
Das genannte Kupplungsmoment kann sich nur einstellen, wenn über den Reibschluß der Kupplung ein Gegenmoment bereitgestellt wird, welches sich über den Antriebsstrang an der Standbremse abstützt. Der Vorgang für das Einrücken der Kupplung ist veranlaßt, die Kupplung ist aber noch nicht vollständig eingerückt, sie schleift also. Sobald das genannte Drehmoment $M_K$ eine Größe erreicht, die es erlaubt, die Standbremse zu lösen wird ein Signal vom Bordrechner die Bremse zum Lösen der Standbremse gegeben. Damit wird mindestens das Fahrzeug in seiner Position durch die Kupplung gehalten.
Das Bruttodrehmoment $M_M$ meint jenes Moment, das der Antriebsmotor durch seinen Verbrennungsvorgang erzeugt und auch abgegeben würde, wenn keine inneren Reibungsverluste anstünden.
Das Schleppmoment $M_S$ meint jenes Moment, das erforderlich ist, um einen lauffähigen Motor ohne Befeuerung in unterschiedlichen Motortemperaturen und unterschiedlichen Drehzahlen zu schleppen. In der Praxis wird beispielsweise für jeden Motortyp in Abhängigkeit von Motortemperatur und der Motordrehzahl das Schleppmoment ermittelt. Zu einem lauffähigen Motor gehört beispielsweise die Einspritzeinrichtung für Treibstoffeinspritzung, die Kühlmittelpumpe und die Ölpumpe für die Druckumlaufschmierung des Motors.
Das Drehmoment $M_{NV}$ meint jenes Moment, das für den Betrieb der motorseitigen Nebenverbraucher erforderlich ist. Die Nebenverbraucher sind beispielsweise der Kühlerlüfter, der Druckluftkompressor, die Lenkhilfepumpe, der Kältemittelverdichter für eine Klimaanlage usw..
Das dynamische Drehmoment $M_D$ meint jenes Moment, das bei instationärem Motorbetrieb, also bei Motordrehzahländerungen, ansteht.
Bei steigender Motordrehzahl wird das dynamische Moment $M_D$ von dem Motordrehmoment abgezogen und bei fallender Motordrehzahl zum Motordrehment hinzugezählt. Das heißt, bei steigender Motordrehzahl wirkt das Rotionsträgheitsmoment entgegen zum Motormoment und bei fallender Motordrehzahl mit dem Motormoment.
Das bisher Beschriebene verwendet den rechnerisch ermittelten Schwellenwert des anstehenden Kupplungsmomentes als Kriterium zum Lösen der Standbremse, wobei im Bordrechner ein statischer oder ein quasi statischer Bremswert (Hillholder) für die Standbremse abgelegt ist.
Ein komfortables Anfahrverhalten erhält man erfindungsgemäß, wenn das erforderliche Moment an der schleifenden Kupplung durch weitere Parameter definiert wird, im nachfolgenden Text Fahrzeugaufbaustufe III oder komfortables Anfahrverhalten genannt.

Fahrzeugaufbaustufe III:

In der weiteren Funktionsverbesserung der Erfindung wird der Schwellenwert des Kupplungsmomentes in Abhängig der Topologie, der Fahrzeuggesamtmasse und der Antreibsstrangübersetzung ermittelt.
Beispielsweise kann dies wie im folgenden durchgeführt werden.
Die Anfahrbeschleunigung ist ein Maß für den Komfort und soll als Ausgangsgröße für die Ermittlung des Kupplungsmomentes vorgegeben werden.
Die Anfahrbeschleunigung a steht in folgender Beziehung:

$$a = \frac{(M_K - M_V) * \ddot{u}_{TS} - F_{HA}}{m_{Fzg}} = \frac{Mk * \ddot{u}_{TS} - F_V - F_{HA}}{m_{Fzg}} = \frac{F_A - F_V - [\pm F_{HA}]}{m_{Fzg}} = \frac{F_R}{m_{Fzg}} \qquad (3)$$

Aus der gewünschten Anfahrbeschleunigung a ergibt sich:

$$M_{K,a} = \frac{a \bullet m_{Fzg.} + F_{HA} + F_V}{\ddot{u}_{TS}} \qquad (4)$$

Hierin bedeuten

a       Fahrzeugbeschleunigung [m/sec$^2$]

$F_A$       Antriebskraft am Rad [N]

$F_{HA}$       Hangabtriebskraft am Rad [N]

$M_V$       Verlustmomente aus Rollwiderstand

$F_R$       Anrollkraft, die für die Beschleunigung maßgeblich ist

$F_V$       Verlustkraft Rollwiderstand [Nm] (=$M_V * \ddot{u}_{TS}$)

ü       Übersetzungsabhängiger Umrechnungsfaktor von Kupplungsmoment auf die Radantriebskraft [1/m]

$m_{Fzg.}$       Fahrzeuggesamtmasse [kg]

$M_{K,a}$       Moment das für eine gewünschte Anfahrbeschleunigung erforderlich ist

Die Anrollkraft $F_R$ am Rad ergibt sich aus der Antriebskraft $F_A$ abzüglich der Verlustkraft durch den Rollwiderstand $F_V$ und der Hangabtriebskraft $F_{HA}$. Hier ist die Hangabtriebskraft $F_{HA}$ positiv definiert. Bei einem Gefälle ergibt sich dann ein negatives Vorzeichen für die Hangabtriebskraft.
Die Hangabtriebskraft ergibt sich aus der Steigung und der Fahrzeuggesamtmasse. Die Fahrzeuggesamtmasse und die Steigung bzw. das Gefälle müssen auf geeignete Weise vorher ermittelt worden sein.
Die Verlustkraft $F_V$ ergibt sich aus dem Rollwiderstand der Fahrzeuggesamtmasse.
In der Zeichnung ist ein Ausführungsbeispiel der Erfindung schematisch dargestellt.
Es zeigt:

Fig. 1 ein Schema mit Signallauf, einfache Ausbaustufe

Fig. 2 ein Schema mit Signallauf, komfortable Ausbaustufe in Verbindung mit Fig. 1

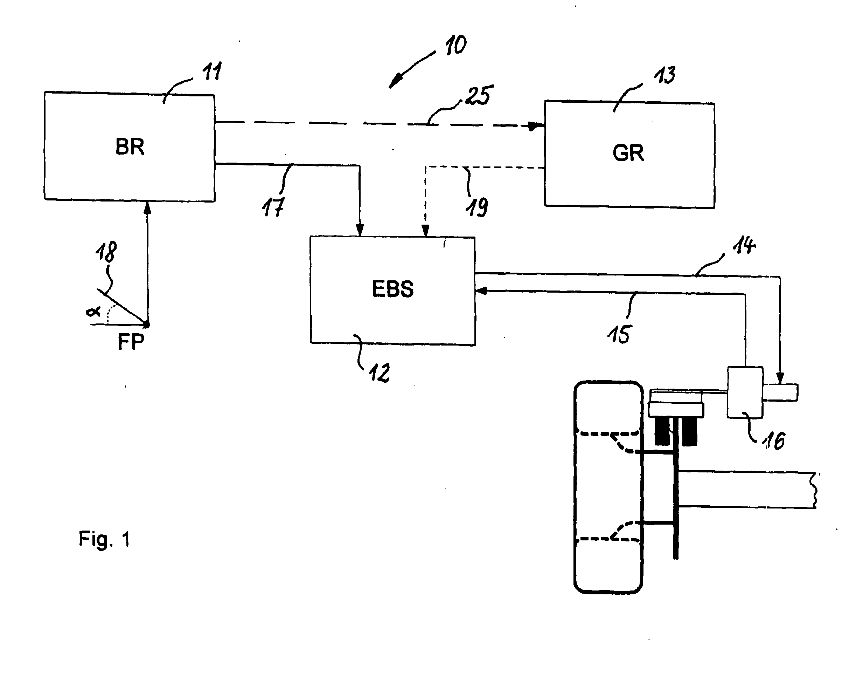

Die Fig. 1 zeigt das Schema 10 der Erfindung zur Anfahrhilfe in der einfachen Ausbaustufe I und II. Aus der Stellung $\alpha$ des Fahrpedals FP wird aus der Motordrehzahl, die der Bordrechner 11 bei einer schleifenden Kupplung (nicht dargestellt, weil der BR 11 das Signal nicht benötigt) kennt, ein aktuelles an der Kupplung anstehendes Drehmoment, Signal 17, errechnet und an die elektronische Bremssteuerung EBS 12 gegeben. Die Berechnung kann auch im BR erfolgen. Dann wird über 17 nur ein Lösesignal übertragen.

Die EBS 12 hat nach der Ausbaustufe I einen vorbestimmten Bremsdruck eingesteuert oder kennt von beispielsweise einem Hillholder den eingesteuerten Bremsdruck, Ausbaustufe II, an der Bremse (Standbremse) 16, dem das Signal 15 als Bremskraft am Rad oder Bremsmoment am Rad entspricht. Hieraus kann die EBS das erforderliche Kupplungsmoment errechnen.

Wenn nun vom Bordrechner 11, abhängig von der Fahrpedalstellung $\alpha$ und vom anstehenden Drehmoment an der schleifenden Kupplung, ein Drehmoment an der schleifenden Kupplung von mindestens dem eingebremsten Bremsmoment, Signal 15, am Fahrzeugrad, ansteht, gibt der BR 11 ein Signal 17 an die EBS 12, die ein Signal 14 zum Lösen der Bremse 16 gibt. Das Signal 15 kann auch den Ist-Druck an der Bremse angeben, der in der EBS 12 als Moment umgerechnet und mit dem an der Kupplung anstehendem Moment, Signal 17, verglichen werden kann. In der Ausbaustufe I ist das Siganl 14 zum Lösen der Bremse 15 von einem geeigneten und beispielsweise versuchsmäßig festgelegten Bremswert oder Bremsdruck, unabhängig von einer Steigung oder einem Gefälle, als Schwellenwert für das Kupplungsmoment $M_K$ vorgesehen.

In der Ausbaustufe II ist der Bremswert oder Bremsdruck von beispielsweise einem Hillholder als Schwellenwert für das Kupplungsmoment $M_K$ vorgesehen, wobei in diesem Fall eine Steigung oder ein Gefälle oder eine horizontale Fahrbahn in etwa berücksichtigt ist.

Eine weitere Möglichkeit der Erfindung zur Anfahrhilfe zeigt das Schema 10 in der gestrichelten Ausführung. Voraussetzung ist, dass ein Getrieberechner GR 13 am oder im Getriebe vorhanden ist, der ein anliegendes Moment an der Getriebeeingangswelle nach der Erfindung als Signaleingang hat und der auch weiss, dass es sich um einen Anfahrvorgang handelt.

Der GR 13 sendet anstelle von Signal 17 ein Signal 19 von dem an der Getriebeeingangswelle aktuellen Eingangsdrehmoment an die EBS12. Die EBS12 verfährt, wie beschreiben und veranlaßt bei gegebenen Bedingungen über Signal 14 ein Lösen der Bremse 16. Über das Signal 25 kann aber auch das an der Kupplung anstehende Kupplungsmoment vom Bordrechner 11 an den Getrieberechner 13 gegeben werden.

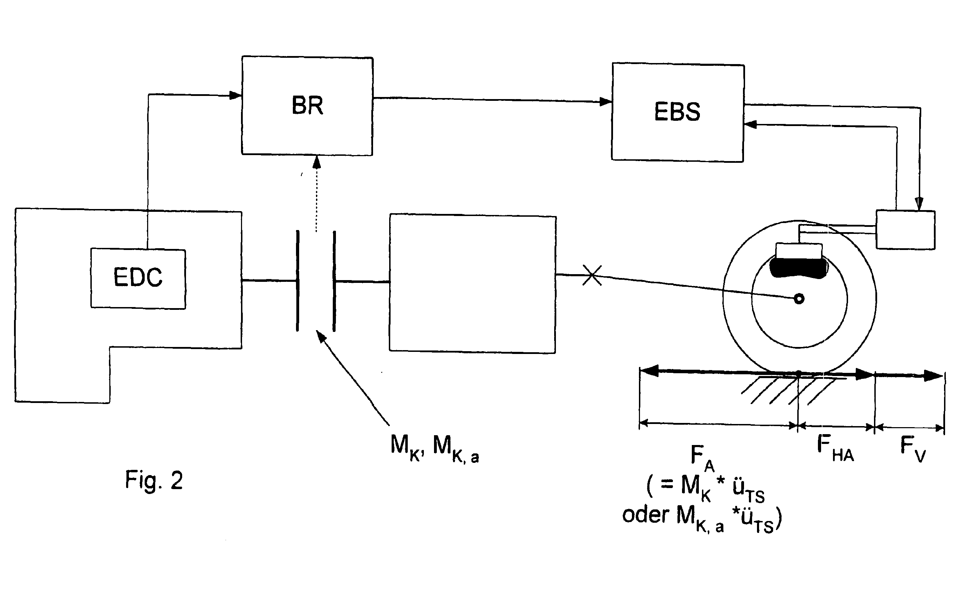

Grundsätzlich gelten Fig. 1 und Fig. 2 für die vereinfachte Anfahrhilfe sowie für die komfortable Anfahrhilfe der Erfindung.

In der vereinfachten Anfahrhilfe, Fahrzeugaufbaustufe I und II, sind die Werte, wie beispielsweise $F_A$, $F_{HA}$ und $F_V$ bei der Auslegung eines zulegenden Schwellenwertes indirekt berücksichtigt. Vorteil dieser Ausführungen ist, dass keine Sensoren, z. B. für die Steigungsmessung, installiert werden müssen. Bei der komfortablen Anfahrhilfe, Ausbaustufe III gilt in besonderer Weise die Fig. 2.

Bei der Ausbaustufe III werden Parameter wie Fahrzeuggesamtmasse, Hangabtriebskraft $F_{HA}$, Rollwiederstandskraft $F_V$ und eine gewünschte Anfahr- oder Anrollbeschleunigung a [m/sec$^2$] in der Berechnung für das Kupplungsmoment $M_{K,a}$ eingebracht.

Die Parameter nach den Formeln (1) und (2) sind vorzugsweise in der EDC 22 abgelegt und können auch durch die EDC berechnet werden. Falls nicht alle Parameter nach den Formeln (1) und (2) in der EDC 22 berechnet werden können, muß der Rest der Parameterverwertung der Bordrechner 11 übernehmen.

Weiterhin muß der Bordrechner 11 in geeigneter Weise die aktuelle Fahrzeuggesamtmasse $m_{Fzg}$ erhalten oder er muß in der Lage sein, diese zu errechnen. Beispielsweise kann vor Fahrtbeginn die Fahrzeuggesamtmasse $m_{Fzg}$ durch Wiegen oder ON BOARD während der Fahrt festgelegt werden. Aus der Fahrzeugmasse $m_{Fzg}$ kann dann, die Verlustkraft $F_V$, die hauptsächlich durch die Art der Bereifung und die Anzahl der Achsen bestimmt ist, rechnerisch ermittelt werden.

Für die Bestimmung der Hangabtriebskraft $F_{HA}$ ist ein geeigneter Neigungssensor vorzusehen. Das Signal des Neigungssensors ist dem Bordrechner zuzuführen, der das Signal entweder direkt verwenden kann oder aus dem Signal eine Hangabtriebskraft $F_{HA}$ errechnen kann. In den Formeln (3) und (4) ist die Hangabtriebskraft an einer Steigung positiv und in einem Gefälle negativ.

Die Beschleunigung a [m/sec$^2$] wird vorzugsweise in den Bordrechner 11 direkt eingegeben oder sie ist vom Fahrzeugführer wählbar oder sie wird bei der Fahrzeugherstellung in die End Of Line (EOL) Datenbank eingegeben.

Der Übersetzungsabhängige Umrechnungsfaktor ü wird aus dem aktuellen Übersetzungsverhältnis des Getriebes und aus der Kenntnis des restlichen Antriebsstranges rechnerich ermittelt.

Aus den beschriebenen Werten ist ein an der schleifenden Kupplung anstehendes Kupplungsmoment $M_{K,a}$, wobei das a im Index für die gewünschte Beschleunigung a[m/sec$^2$] steht, erforderlich. Bei einer eingegebenen Beschleunigung von a = 0[m/sec$^2$] wird das Fahrzeug in seiner Position gehalten und bei a > 0[m/sec$^2$] wird das Fahrzeug

beim Anfahren mit der gewünschten Beschleunigung beschleunigt.

Mit der Erfindung ist es möglich, von zwei preiswerten Lösungen bis hin zu einer komfortablen Ausführung eine Anfahrhilfe eine über die Lebensdauer des Fahrzeugs während Anfahrhilfe zu haben.

Bezugszeichenliste

| | |
|---|---|
| 10 | Schema |
| 11 | Bordrechner (BR) |
| 12 | Electronic Brake System (EBS) |
| 13 | Getrieberechner (GR) |
| 14 | Signal zum Einsteuern/Lösen der Standbremse |
| 15 | Signal über den eingesteuerten Bremsdruck / eingesteuertes Bremsmoment |
| 16 | Standbremse (Bremse) |
| 17 | Signal über das an der Kupplung anstehende Moment ($M_K$, $M_{K,a}$) |
| 18 | Fahrpedal |
| 19 | Signal vom Getrieberechner |
| 20 | Schema |
| 21 | Antriebsmotor |
| 22 | Electronic Diesel Control (EDC) |
| 23 | Reibungskupplung |
| 24 | Getriebe |
| 25 | Signal über das an der Kupplung anstehende Moment (alternativ) |

**Patentansprüche**

1. Verfahren zur Anfahrhilfe eines Kraftfahrzeugs, insbesondere Nutzfahrzeugs, mit einer automatischen Standbremse, mit der vom Fahrzeugführer über das Bremspedal indirekt ein bestimmter Bremsdruck eingestellt wird, so dass das Fahrzeug im Stand nicht wegrollt, mit einer Reibungskupplung oder einer hydraulischen Kupplung im Antriebsstrang, die beim Anfahrvorgang ein Antriebsmoment von einem Verbrennungsmotor auf den Antriebsstrang übertragen kann und die Standbremse gelöst wird, **dadurch gekennzeichnet, dass** ein an der Kupplung anstehendes, auf den Antriebsstrang wirkendes Kupplungsmoment ($M_K$, $M_{K,a}$) aus der Drehmomentbilanz des Verbrennungsmotors ermittelt wird und bei einem Anfahrvorgang die Standbremse (16) dann gelöst wird, wenn das Kupplungsmoment ($M_K$, $M_{K,a}$) gleich oder größer ist als

     - ein statisch festgelegtes Bremsmoment,
     - das vom Fahrzeugführer eingebremste Bremsmoment oder
     - ein Moment ($M_{K,a}$), das für eine gewünschte Anfahrbeschleunigung (a) erforderlich ist.

2. Verfahren nach Anspruch 1,
   **dadurch gekennzeichnet, dass** abhängig von der Fahrpedalstellung ($\alpha$) das an der Kupplung anstehende Kupplungsmoment ($M_K$, $M_{K,a}$) vom Bordrechner (11) errechnet wird.

3. Verfahren nach Anspruch 1 oder 2,
   dass aus die im Verbrennungsmotor genutzte Treibstoffmenge gemessen und aus der Treibstoffmenge ein abgebbares Motormoment errechnet wird, das an den Bordrechner (11) übertragen wird.

4. Verfahren nach einem der Ansprüche 1 bis 3,
   **dadurch gekennzeichnet, dass** der Druck in der Standbremse über ein Rampe gelöst wird.

5. System zur Anfahrhilfe eines Kraftfahrzeugs, insbesondere eines Nutzfahrzeugs, mit einer automatischen Standbremse, mit der vom Fahrzeugführer über das Bremspedal indirekt ein bestimmter Bremsdruck einstellbar ist, das ein Bremsmoment ergibt, so dass das Fahrzeug im Stand nicht wegrollt, mit einer Reibungskupplung oder einer hydraulischen Kupplung im Antriebsstrang, über die beim Anfahrvorgang ein Antriebsmoment vom Verbrennungsmotor auf den Antriebsstrang übertragbar ist,
   **dadurch gekennzeichnet, dass** abhängig von der Fahrpedalstellung ($\alpha$) ein an der Kupplung anstehendes Kupplungsmoment ($M_K$, $M_{K,a}$) vom Bordrechner (11) ermittelbar ist. mittels einer Treibstoffzumessungseinrichtung (22) ein abgebbares Motormoment errechenbar und an den Bordrecher (11) übertragbar ist und über das elektronische Bremssystem (12) ein Lösen der Standbremse (16) unter Zugrundelegung des Kupplungsmoments ($M_K$, $M_{K,a}$) und des Motormoments auslösbar ist, sobald das anstehende Kupplungsmoment ($M_K$, $M_{K,a}$) größer ist, als das eingebremste Bremsmoment oder das Anrollmoment.

## Claims

1. Procedure for aiding the moving-off of a motor vehicle, in particular a commercial vehicle, with an automatic stop brake, with which the driver indirectly sets a certain braking pressure via the brake pedal so that the vehicle does not roll off while stationary, with a friction clutch or a hydraulic clutch in the driveline, which friction clutch or a hydraulic clutch can transmit a driving moment from an internal combustion engine to the driveline during the moving-off procedure, whereby the stop brake is released, **characterised in that** a clutch moment ($M_K$, $M_{K,a}$) supplied to the clutch and acting on the driveline is calculated from the torque balance of the internal combustion engine and the stop brake (16) is released during a moving-off procedure if the clutch moment ($M_K$, $M_{K,a}$) is equal to or larger than

   • a statically determined braking moment,
   • the braking moment applied by the driver or
   • a moment ($M_{K,a}$) necessary for a required moving-off acceleration (a).

2. Procedure according to Claim 1,
   **characterised in that** the clutch moment ($M_K$, $M_{K,a}$) supplied to the clutch is calculated by the onboard computer (11) as a function of the accelerator pedal position ($\alpha$).

3. Procedure according to Claim 1 or 2,
   **characterised in that** the fuel quantity used in the internal combustion engine is measured and an engine torque which can be put out is calculated from said fuel quantity and transmitted to the onboard computer (11).

4. Procedure according to one of the Claims 1 to 3,
   **characterised in that** the pressure in the stop brake is released via a ramp.

5. System for aiding the moving-off of a motor vehicle, in particular a commercial vehicle, with an automatic stop brake, with which the driver can indirectly set a certain braking pressure via the brake pedal, which system supplies a braking moment so that the vehicle does not roll off while stationary, with a friction clutch or a hydraulic clutch in the driveline, via which friction clutch or a hydraulic clutch a driving moment can be transmitted from the internal combustion engine to the driveline,
   **characterised in that** a clutch moment ($M_K$, $M_{K,a}$) supplied to the clutch can be calculated by the onboard computer (11) as a function of the accelerator pedal position ($\alpha$), an engine torque which can be put out can be calculated with the aid of a fuel metering device (22) and transmitted to the onboard computer (11) and the releasing of the stop brake (16) can be triggered via the electronic braking system (12) on the basis of the clutch moment ($M_k$, $M_{K,a}$) and of the engine torque as soon as the supplied clutch moment ($M_K$, $M_{K,a}$) is larger than the applied braking moment or the rolling-off moment.

## Revendications

1. Procédé d'aide au démarrage d'un véhicule automobile, en particulier d'un véhicule industriel, avec un frein d'immobilisation automatique, avec lequel une certaine pression de freinage est indirectement réglée par le chauffeur via la pédale de frein de sorte que le véhicule reste immobilisé, avec un embrayage à friction ou un embrayage hydraulique dans la chaîne cinématique, qui lors du démarrage, peut transmettre un couple d'entraînement d'un moteur à combustion interne à la chaîne cinématique et le frein d'immobilisation est desserré, **caractérisé en ce qu'**un couple d'embrayage ($M_K$, $M_{K,a}$) situé au niveau de l'embrayage et agissant sur la chaîne cinématique est déterminé à partir du bilan de couple du moteur à combustion interne et donc, au démarrage, le frein d'immobilisation (16) est desserré lorsque le couple d'embrayage ($M_K$, $M_{K,a}$) est supérieur ou égal à :

   - un couple de freinage défini de manière fixe ou
   - un couple de freinage défini par le chauffeur au freinage ou

- un couple ($M_{K,a}$), indispensable à une accélération de démarrage (a) souhaitée.

**2.** Procédé selon la revendication 1,
**caractérisé en ce que** le couple d'embrayage ($M_K$, $M_{K,a}$) appliqué à l'embrayage est calculé par l'ordinateur de bord (11) en fonction de la position de la pédale d'accélérateur ($\alpha$).

**3.** Procédé selon la revendication 1 ou 2,
**caractérisé en ce qu'**un couple moteur transmissible, transmis à l'ordinateur de bord, est calculé à partir de la mesure de la quantité de carburant utilisée par le moteur à combustion interne et à partir de la quantité de carburant.

**4.** Procédé selon les revendications 1 à 3,
**caractérisé en ce que** la pression dans le frein d'immobilisation est libérée via une rampe.

**5.** Système d'aide au démarrage d'un véhicule automobile, en particulier d'un véhicule industriel, avec un frein d'immobilisation automatique, avec lequel une certaine pression de freinage est indirectement réglable par le chauffeur via la pédale de frein, cette pression produisant un couple de freinage, de sorte que le véhicule reste immobilisé, avec un embrayage à friction ou un embrayage hydraulique dans la chaîne cinématique, par lequel un couple moteur peut être transmis au démarrage d'un moteur à combustion interne à la chaîne cinématique,
**caractérisé en ce que**, en fonction de la position de la pédale d'accélérateur ($\alpha$), un couple d'embrayage ($M_K$, $M_{K,a}$) appliqué à l'embrayage peut être déterminé par l'ordinateur de bord (11), un couple transmissible peut être calculé au moyen d'un dispositif de mesure du carburant (22) et, via le système de freinage électronique (12), le desserrage du frein d'immobilisation (16) est déclenché sur la base du couple d'embrayage ($M_K$, $M_{K,a}$) et du couple moteur dès que le couple d'embrayage existant ($M_K$, $M_{K,a}$) est supérieur au couple de freinage et au couple de roulement.

Fig. 1

EP 1 584 531 B1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19625919
- DE 10065589
- DE 10221835
- DE 10105749